# EUROPEAN PATENT APPLICATION

(11) **EP 3 153 147 A1**
(43) Date of publication of application: **12.04.2017**
(21) Application number: 16192331.3
(22) Date of filing: 05.10.2016
(51) Int. Cl.: A61H 3/04, G08B 21/04, B62B 5/00, B62B 5/06

(54) **ELECTRIC VEHICLE AND CONTROL METHOD THEREOF**

(30) Priority: 05.10.2015 JP 2015197949
(71) Applicant: Nabtesco Corporation, Tokyo (JP)
(72) Inventor: HASHIMOTO, Hiroaki, Kobe-shi, Hyogo (JP)
(74) Representative: Grünecker Patent- und Rechtsanwälte PartG mbB

(57) **Abstract**

One object is to provide an electric vehicle that does not move when a user grips the handle with one hand and puts his/her weight on the electric vehicle while trying to pick up goods with the other hand, and to provide a method of controlling the electric vehicle. The electric vehicle 10 includes: a wheel 13 provided on a frame 11; a brake unit 20 for braking the wheel 13; a pair of handles 14 to be individually operated by a user; and an operation sensing means for sensing whether individual ones of the pair of handles 14 are operated by the user. A control unit 16 controls the brake unit 20 based on a signal from the operation sensing means 24. When the user operates only one of the pair of handles 14, the control unit 16 controls the brake unit 20 to brake the wheel 13.

## Description

### TECHNICAL FIELD

The present invention relates to an electric vehicle for assisting elderly people, disabled people, patients and others with a gait impairment in walking, The invention also relates to a method of controlling the electric vehicle.

### BACKGROUND

There have been used walking aids including a wheeled walker (a rollator, a rolling walker) that assists the elderly's outing, and a walker that assists disabled people or patients in walking. For instance, Japanese Patent Application Publication No. 2009-183407 (Patent Literature 1) disclosed a walking aid device which can be easily operated by a user to travel straight or turn.

The walking aid device (the electric rolling walker) disclosed in Patent Literature 1 includes a frame body having a handle portion to be held by a user, more than one wheel provided on the right and left sides of the frame body, more than one driving motor that drives each wheel rotatably, and a controller that detects a counter electromotive force generated at the driving motor and then controls the driving motor based on the detected counter electromotive force.

The walking aid device of Patent Literature 1 also includes a touch sensor on the handle portion, for sensing whether the user is gripping the handle portion. When determining that the user is not gripping the handle portion based on the sensing signal, the walking aid device applies brake to the wheels. However, this walking aid device cannot distinguish whether the user is gripping the handle portion with one hand or two hands.

### RELEVANT REFERENCES

### LIST OF RELEVANT PATENT LITERATURE

Patent Literature 1: Japanese Patent Application Publication No. 2009-183407

### SUMMARY

In shopping for example, an elderly user using an electric vehicle as a walking aid device may grip the handle with one hand and put his/her weight on the electric vehicle while trying to pick up goods with the other hand. However, if the electric vehicle is not braked enough, the electric vehicle may move when the user moves the other hand away from the handle while putting his/her weight on the electric vehicle. This may cause the user to lose his/her balance and fall.

One object of the present invention is to provide an electric vehicle that does not move when a user grips the handle with one hand and puts his/her weight on the electric vehicle while trying to pick up goods with the other hand, and to provide a method of controlling the electric vehicle.

An electric vehicle of the present invention comprises: a wheel or an endless track provided on a frame; a brake unit configured to brake the wheel or the endless track; a pair of handles connected to the frame and configured to be individually operated by a user; an operation sensing means configured to sense whether individual ones of the pair of handles are operated by the user; and a control unit configured to control the brake unit based on a signal from the operation sensing means, wherein when the user operates only one of the pair of handles, the control unit controls the brake unit to brake the wheel or the endless track.

In the electric vehicle of the present invention, when the user stands still and operates only one of the pair of handles, the control unit may control the brake unit to brake the wheel or the endless track.

In the electric vehicle of the present invention, when the user walks and operates only one of the pair of handles, the control unit may not cause the brake unit to brake the wheel or the endless track.

In the electric vehicle of the present invention, when the brake unit brakes the wheel or the endless track and the user operates only one of the pair of handles, the control unit may control the brake unit to brake the wheel or the endless track.

In the electric vehicle of the present invention, when the user operates both of the pair of handles, the control unit may not cause the brake unit to brake the wheel or the endless track.

In the electric vehicle of the present invention, when the user operates none of the pair of handles, the control unit may control the brake unit to brake the wheel or the endless track.

In the electric vehicle of the present invention, the wheel or the endless track may have a motor connected thereto, and the motor may serve as a drive unit for driving the wheel or the endless track and as the brake unit.

In the electric vehicle of the present invention, when the user operates none of the pair of handles and the wheel or the endless track is driven, the control unit may cause reverse braking of a drive unit for driving the wheel or the endless track thereby to brake the wheel or the endless track.

In the electric vehicle of the present invention, the wheel or the endless track and the drive unit may be provided on each of left and right sides of the electric vehicle, and the control unit may control the left and right drive units independently from each other.

The electric vehicle of the present invention further comprises an obliqueness sensor for sensing obliqueness of the electric vehicle, wherein the control unit may cause braking of the wheel or the endless track based on the obliqueness of the electric vehicle sensed by the obliqueness sensor.

In the electric vehicle of the present invention, the control unit may vary strength of braking of the wheel or the endless track in accordance with time elapsed since the user moved his/her hands away from both of the handles.

In the electric vehicle of the present invention, when the user operates one or both of the pair of handles during reverse braking of the drive unit, the control unit may stop the reverse braking of the drive unit.

The electric vehicle of the present invention further comprises an obliqueness sensor for sensing obliqueness of the electric vehicle, wherein when the electric vehicle is pushed by an external force or the obliqueness sensor senses more than a predetermined amount of obliqueness of the electric vehicle, the control unit may cause reverse braking of a drive unit for driving the wheel or the endless track to brake the wheel or the endless track.

The electric vehicle of the present invention further comprises an obliqueness sensor for sensing obliqueness of the electric vehicle, wherein when the electric vehicle is stopped and the obliqueness sensor does not sense more than a predetermined amount of obliqueness of the electric vehicle, the control unit may short phases of a drive unit for driving the wheel or the endless track to brake the wheel or the endless track.

A method of controlling an electric vehicle of the present invention is a method of controlling the electric vehicle comprising: a wheel or an endless track provided on a frame; a brake unit configured to brake the wheel or the endless track; and a pair of handles connected to the frame and configured to be individually operated by a user, and the method comprises: determining whether the user operates only one of the pair of handles; and braking the wheel or the endless track when the user operates only one of the pair of handles.

The present invention provides an electric vehicle that does not move when a user grips the handle with one hand and puts his/her weight on the electric vehicle while trying to pick up goods with the other hand and provides a method of controlling the electric vehicle.

### BRIEF DESCRIPTION OF THE DRAWINGS

Fig. 1 is a perspective view of a power-assisted rollator according to a first embodiment of the present invention.
Fig. 2 is a side view of the power-assisted rollator according to the first embodiment of the present invention.
Fig. 3 schematically shows an operation sensing means.
Fig. 4 schematically shows a variation of the operation sensing means.
Fig. 5 is a flowchart for explaining an example of the operation of the control unit according to the first embodiment of the present invention.
Fig. 6 is a table showing the conditions for the case where wheels are braked and the case where wheels are not braked in the first embodiment of the present invention.
Fig. 7 is a flowchart for explaining an example of the operation of the control unit according to the second embodiment of the present invention.

### DESCRIPTION OF EXAMPLE EMBODIMENTS

### First Embodiment

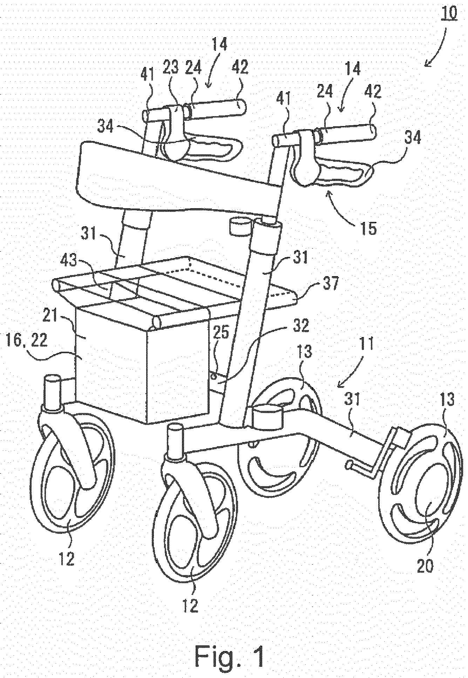

The first embodiment of the present invention will now be described with reference to Figs. 1 to 6. In the following description, like elements are numbered and labeled similarly. The like elements also have the same names and functions. The descriptions of such elements will appear once.

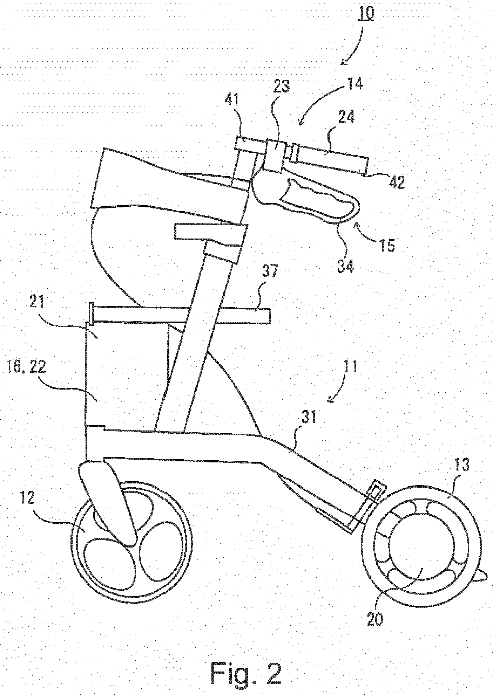

Figs. 1 and 2 show an electric rollator (hereunder referred to as a power-assisted rollator) as an example of an electric vehicle. Fig. 1 is a schematic perspective view of an example of an external appearance of a power-assisted rollator 10 according to the first embodiment. Fig. 2 is a side view of the power-assisted rollator 10 shown in Fig. 1.

### Structure of Power-Assisted Rollator

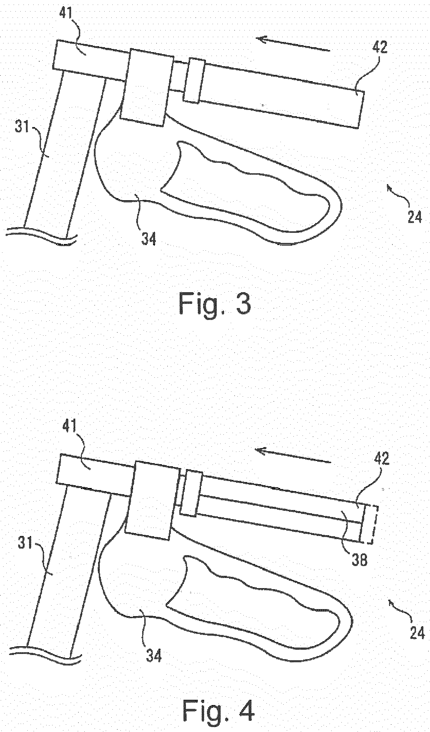

Referring to Figs. 1 and 3, the power-assisted rollator 10 may include a frame 11, a pair of front wheels 12 and a pair of rear wheels 13 provided on the frame 11, and a pair of handles 14 connected to the frame 11. Each of the handles 14 may be provided with a hand brake 15 for manually stopping the power-assisted rollator 10.

Each of the pair of rear wheels 13 may be provided with a motor 20 for assisting the movement of the corresponding rear wheel 13. On the frame 11, there may be mounted a battery 21 and a control unit 16. The control unit 16 may have a speed sensor 22. Further, on each of the handles 14, there may be provided a gyrosensor (an inclination sensor) 23 and an operation sensing means (a grip sensor, an operation force sensor) 24.

Next, elements of the power-assisted rollator 10 will be described.

The frame 11 may include a left-right pair of pipe frames 31, and a coupling frame 32 that couples the pair of pipe frames 31 together in a lateral direction.

On the front ends of the left and right pipe frames 31, there may be provided a pair of front wheels 12. Both of the pair of front wheels 12 may be configured to wheel in a front-rear direction and also rotate about a vertical axis.

On the rear ends of the left and right pipe frames 31, there may be provided a pair of rear wheels 13. The rear wheels 13 may be configured to wheel in the front-rear direction. Accordingly, the power-assisted rollator 10 can be easily moved forward and backward, and moreover, can be easily operated in a left-right direction or easily turned around.

On the upper ends of the left and right pipe frames 31, there may be provided a pair of handles 14. The pair of handles 14 may be individually operated by the user. The term "operated" may refer to the case where a part of the body of the user or his/her belonging leans against, rests on, or contacts with the handles, in addition to the case where the user grips the handles. The term "grip" may refer to holding the handles so as to cover them, which may include the case where the handles are held lightly in addition to the case where the handles are gripped tightly. This embodiment will be described for the case where the pair of handles 14 are gripped by the user, for example.

Each of the pair of handles 14 may include a pole 41. The poles 41 may each have a grip 42 provided thereon. Also, the poles 41 may each have a brake lever 34 provided thereon. It may also be possible to configure the handles 14 in a different manner. For example, a bar handle may be provided so as to extend horizontally and connect the left and right pipe frames 31, and the bar handle may be provided with grips 42 serving as the left and right handles 14.

The battery 21 may supply power to elements of the power-assisted rollator 10 such as the motors 20 and the control unit 16. The battery 21 may be fixed on a coupling frame 32 positioned between the pair of pipe frames 31. Over the battery 21, there may be provided a storage 43 for storing the user's belongings. Adjacent to the storage 43 may be a seat 37 on which the user can sit.

In this embodiment, the motors 20 may be provided in the rear wheels 13. The motors 20 may be any motors such as servomotors, stepper motors, AC motors, and DC motors. Moreover, a reducer can be integrated with the motors.

In the embodiment, the motors 20 may assist the movement of the rear wheels 13 and also serve as power-generating brakes. That is, in the embodiment, the motors 20 may serve as drive units for driving the rear wheels 13 and as brake units for braking the rear wheels 13. When the motors 20 brake the rear wheels 13, the motor 20 may serve as power generators while braking the rear wheels with resistance forces thereof. When the motors 20 serve as brake units, the motors 20 may be used as reverse brakes in which the motors 20 drive reversely or as short-circuit brakes in which the phases of the motors 20 are shorted, as described later. Alternatively, it may also be possible that the motors only serve as drive units for driving the rear wheels 13, and the brake units for braking the rear wheels 13 are provided separately from the motors 20. Such brake units may be electromagnetic brakes, mechanical brakes, etc.

In the embodiment, the rear wheels 13 may have the motors 20 installed therein, but it may also be possible that only the pair of front wheels 12 have motors 20 installed therein or all of the pair of front wheels 12 and the pair of rear wheels 13 may have motors 20 installed therein.

The control unit 16 may control the entirety of the power-assisted rollator 10 including the motors 20. The control unit 16 may be provided adjacent to the battery 21. The control by the control unit 16 will be described later.

The speed sensor 22 may sense the number of rotations or the speed of the rear wheels 13 and send signals representing the number of rotations or the speed to the control unit 16. The speed sensor 22 may be disposed adjacent to the control unit 16. It may also be possible that the speed sensor 22 is installed in the pair of rear wheels 13 of the power-assisted rollator 10. Alternatively, it may also be possible that the speed sensor 22 is provided in only the pair of front wheels 12 or in all of the pair of front wheels 12 and the pair of rear wheels 13, as the motor 20.

If the motors 20 are brushless motors, the speed sensor 22 may calculate the number of rotation or the speed of the wheels or the speed of the power-assisted rollator 10 using a hall element included in the motors 20.

When the speed can be sensed from a counter electromotive force of the motors 20, the number of rotations or the speed of the wheels or the speed of the power-assisted rollator 10 may be calculated from the counter electromotive force. When angular velocities of the rear wheels 13 or the front wheels 12 can be sensed, the number of rotations or the speed of the wheels or the speed of the power-assisted rollator 10 may be calculated from the angular velocities.

The speed sensor 22 may be installed in any of the components such as the frame 11 and the pair of handles 14, as well as in the pair of the front wheels 12 and the pair of the rear wheels 13. If the speed sensor includes an acceleration sensor, the speed may be calculated by integrating acceleration components. If the speed sensor includes a global positioning system (GPS), the speed may be calculated by differentiating location information.

The gyrosensor 23 may sense the inclination of the power-assisted rollator 10, or sense, for example, whether the power-assisted rollator 10 is on a flat surface or on an inclined surface, and may send to the control unit 16 a signal related to the inclination of the power-assisted rollator 10 in the front-rear direction or the left-right direction. The gyrosensor 23 may be provided in the upper portion of the power-assisted rollator 10, for example, in the pair of handles 14. Alternatively, the gyrosensor 23 may be disposed adjacent to the control unit 16. Alternatively the gyrosensor 23 may be provided in the lower portion of the power-assisted rollator 10. However, if the gyrosensor 23 is provided in the upper portion, it is possible to sense the attitude of the power-assisted rollator 10 more accurately as compared to the case where the gyrosensor 23 is provided in the lower portion. In addition, the attitude of the power-assisted rollator 10 may be sensed by an acceleration sensor having two or more axes instead of the gyrosensor.

Figs. 3 and 4 are schematic views for explaining the operation sensing means 24.

On each of the grips 42 of the pair of handles 14, there may be provided the operation sensing means 24 for sensing the force of the user to manually push or pull the power-assisted rollator 10. Displacement of the operation sensing means 24 in the pushing and/or pulling direction with respect to the poles 41 may be restricted by an elastic member such as a spring (not shown). The operating force sensor 24 may further include a potentiometer to detect the displacement.

As mentioned above, the grips 42 may be movable in the front-rear direction with respect to the poles 41. When the grips are moved in the direction of the arrows in Figs. 3 and 4 (the front direction), it may be determined that the power-assisted rollator 10 is pushed by the user. When the grips are moved in the direction opposite to the direction of the arrows in Figs. 3 and 4 (the rear direction), it may be determined that the power-assisted rollator 10 is pulled by the user. When the grips are not moved, it may be determined that the rollator is neither pushed nor pulled.

In this manner, it may be possible to determine whether the user tries to move the power-assisted rollator 10 forward or backward, or whether the user does not have the intention to change the state of the power-assisted rollator 10.

Each of the left and right handles 14 may have a separate operation sensing means 24. The operation sensing means 24 may sense a grip force on the handles 14 independently from each other and send a signal of the sensed grip force to the control unit 16. Thus, it can be recognized whether the user grips only one of the pair of handles 14 (the one hand gripping state), grips none of the pair of handles 14 (the non-hand gripping state), or grips both the pair of the handles 14 (the two hand gripping state).

Referring again to Fig. 4, strain sensors 38 (for example, strain gauges) may be provided on the grips 42 to sense the moments on the grips 42 or the pair of pipe frames 31, and the strain sensors may serve as the operation sensing means 24. In this case, the grips 42 may be fixed on the poles 41 so that the structure may be simple. Alternatively, a joy stick, a push button, or a proximity sensor or a pressure sensor for sensing a hand of the user may be provided on the grips 42 and these may be used as the operation sensing means 24.

In the embodiment, when the user of the power-assisted rollator 10 grips only one of the handles 14 (the one hand gripping state), the control unit 16 may control the motors 20 (brake units) to brake the rear wheels 13. More specifically, when only one of the pair of operation sensing means 24 senses the grip force imparted to the handle 14 and the other operation sensing means 24 does not sense the grip force imparted to the handle 14, the control unit 16 may determine that the user grips only one of the handles 14 (the one hand gripping state). In this case, the control unit 16 may control the motors (brake units) 20 so as to serve as power-generating brakes and thereby brake the rear wheels 13.

It may be preferable that the control unit 16 causes the motors 20 to brake the rear wheels 13 when the user stands still and grips only one of the handles 14 (the one hand gripping state). More specifically, when the speed of the rear wheels 13 sensed by the speed sensor 22 is equal to or less than a predetermined speed V (V is zero or greater) and only one of the pair of operation sensing means 24 senses the grip force imparted to the handle 14, the control unit 16 may cause the motors 20 to brake the rear wheels 13. The control unit 16 may determine that the power-assisted rollator 10 is stopped (or moved in a low speed) and the user grips the handle 14 with only one hand, and the control unit 16 may cause braking so as to stop the power-assisted rollator 10. Thus, even when the user grips the handle 14 with one hand and puts his/her weight on the power-assisted rollator 10 while trying to pick up goods with the other hand, the power-assisted rollator 10 can be prevented from being moved unintentionally.

When the user walks while gripping only one of the handles 14 (the one hand gripping state), the motor 16 may preferably not cause the motors (brake units) 20 to brake the rear wheels 13. More specifically, when the speed of the rear wheels 13 sensed by the speed sensor 22 exceeds the predetermined speed V and only one of the pair of operation sensing means 24 senses the grip force imparted to the handle 14, the control unit 16 may not cause the motors 20 to brake the rear wheels 13. When the user walking with both his/her hands gripping the handles 14 (the two hand gripping state) temporarily moves only one of the hands away from the handle 14 (the one hand gripping state), the power-assisted rollator 10 may continue to move without being braked. Thus, even when the user temporarily moves one of his/her hands away from the handle 14 during walking due to sudden weakness or so as to wipe his/her face with the hand, the power-assisted rollator 10 may not be unnecessarily braked.

Further, when the user walks while the motors (brake units) 20 brake the rear wheels 13 and the user grips only one of the handles 14, the control unit 16 may preferably continue to brake the rear wheels 13. Thus, even when the rear wheels 13 are braked and only one of the handles 14 is pushed such that the rear wheels 13 reach a speed higher than the predetermined speed V, the rear wheels 13 may not be released from braking.

As described above, the control unit 16 may control the operation and braking of the motors 20 based on the signals from the speed sensor 22 and the operation sensing means 24.

### Control Method by the Control Unit

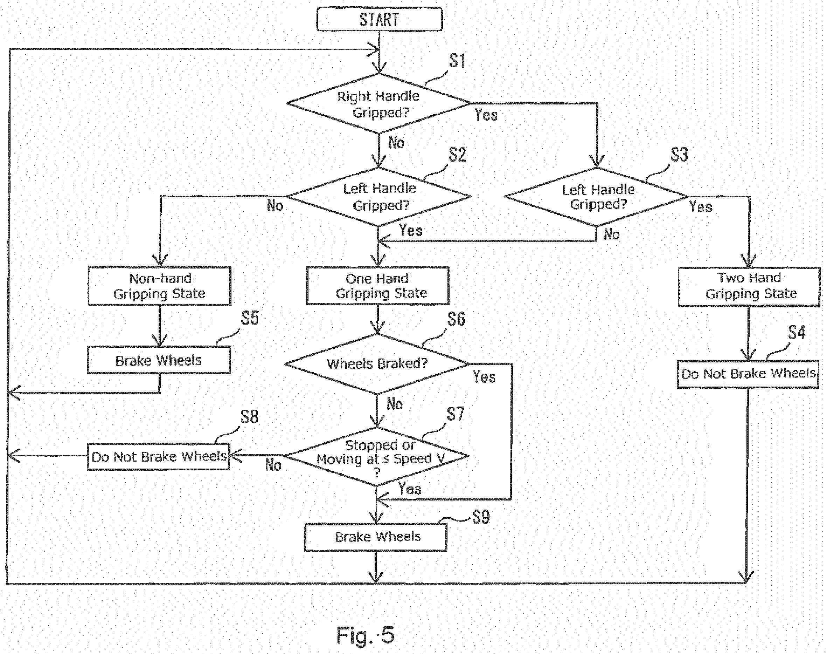

Next, a method of controlling the power-assisted rollator 10 by the control unit 16 will be described. Fig. 5 is a flowchart for explaining one example of the operation of the control unit 16.

First, the control unit 16 may perceive how the pair of handles 14 are gripped by the user. More specifically, the control unit 16 may determine whether (1) only one of the left and right handles 14 is gripped (the one hand gripping state), (2) none of the left and right handles 14 is gripped (the non-hand gripping state), or (3) both of the left and right handles 14 are gripped (the two hand gripping state), based on the signals from the operation sensing means 24 provided on both the left and right handles 14 (steps S1 to S3).

More specifically, when any of the grips 42 of the handles 14 is displaced forward or backward, the associated operation sensing means 24 may detect a grip force imparted to the grip 42. At this time, it can be determined that the handle 14 is gripped by the user. On the other hand, when none of the grips 42 of the handles 14 is displaced forward or backward, no operation sensing means 24 may detect a grip force imparted to the grips 42. At this time, it can be determined that the handles 14 are not gripped by the user. When such determination is made for both the left and right handles 14, the control unit 16 may determine whether (1) only one of the left and right handles 14 is gripped (the one hand gripping state), (2) none of the left and right handles 14 is gripped (the non-hand gripping state), or (3) both of the left and right handles 14 are gripped (the two hand gripping state).

It may also be possible that the control unit 16 uses the rate of change of the grip force (the absolute value) in addition to the value of the grip force (the absolute value) so as to determine whether the handles 14 are gripped by the user. This may enable determining whether the handles 14 are gripped by the user more accurately. For example, when the absolute value of the grip force is equal to or less than a predetermined value and the absolute value of the rate of change of the grip force (the differentiation value of the grip force) is equal to or less than a predetermined value, the control unit 16 may determine that the handle 14 is not gripped by the user, and otherwise, the control unit 16 may determine that the handle 14 is gripped by the user. Further, when the grip force and the rate of change of the grip force reside within an oval region internally touching a rectangular numerical region defined by the predetermined values, the control unit 16 may determine that the handle 14 is not gripped by the user. This may enable further accurate determination.

In the case where (3) both of the left and right handles 14 are gripped (the two hand gripping state), the control unit 16 may continue to assist the movement of the rear wheels 13 by the motors 20 without braking the rear wheels 13 (step S4),

In the case where (2) none of the left and right handles 14 is gripped (the non-hand gripping state), the control unit 16 may control the motors 20 (brake units) 20 to brake the rear wheels 13 (step S5).

In the case where (1) only one of the left and right handles 14 is gripped (the one hand gripping state), the control unit 16 may determine whether the rear wheels 13 are braked by the motors (brake units) 20 at that time (step S6). If the rear wheels 13 are braked by the motors (brake units) 20 ("Yes" in step S6), the control unit 16 may continue to control the motor 20 (brake units) to brake the rear wheels 13.

On the other hand, if the rear wheels 13 are not braked by the motors (brake units) 20 ("No" in step S6), the control unit 16 may then determine whether the user stands still or is walking (step S7).

More specifically, the speed sensor 22 may sense the number of rotations or the speed of the rear wheels 13 and send signals representing the number of rotations or the speed to the control unit 16. The control unit 16 may calculate the speed of the rear wheels 13 based on the received signals and compare the speed with a predetermined speed V.

If the rear wheels are moving at a speed higher than the predetermined speed V ("No" in step S7), the control unit 16 may determine that the user is walking and continue to assist the movement of the rear wheels 13 by the motors 20 without braking the rear wheels 13 (step S8).

On the other hand, if the rear wheels 13 are stopped or moving at a speed equal to or lower than the predetermined speed V ("Yes" in step S7), the control unit 16 may determine that the user stands still and control the motors 20 (brake units) to brake the rear wheels 13 (step S9).

It may also be possible that the control unit 16 uses the acceleration of the rear wheels 13 in addition to the speed of the rear wheels 13 so as to determine whether the user stands still or is walking. This may enable determining whether the user stands still or is walking more accurately. For example, when the speed of the rear wheels 13 is equal to or lower than the predetermined speed V and the acceleration of the rear wheels 13 is equal to or lower than a predetermined acceleration, the control unit 16 may determine that the user stands still and brake the rear wheels 13, and otherwise, the control unit 16 may determine that the user is walking and may not brake the rear wheels 13.

The control unit 10 may repeat the above-described process until the main power supply of the power-assisted rollator 10 is turned off.

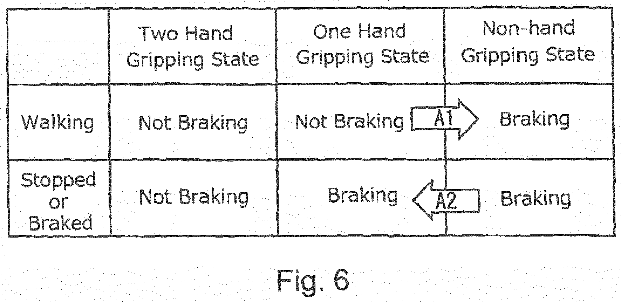

Fig. 6 is a table showing the conditions for the case where the rear wheels 13 are braked ("Braking") and the case where the rear wheels 13 are not braked ("Not Braking"). As shown in Fig. 6, for example, when the user switches, during walking, from the state where he/she grips only one of the handles 14 (the one hand gripping state) to the state where he/she grips none of the pair of handles 14 (the non-hand gripping state) (as shown by the arrow A1), the rear wheels 13 may be braked to stop the power-assisted rollator 10. Further, for example, when the user standing still switches from the state where he/she grips none of the pair of handles 14 (the non-hand gripping state) to the state where he/she grips only one of the handles 14 (the one hand gripping state) (as shown by the arrow A2), the rear wheels 13 may remain braked.

As described above, in the embodiment, when the user grips only one of the pair of handles 14, the control unit 16 may control the motors (brake units) 20 to brake the rear wheels 13. Thus, even when the user grips the handle 14 with one hand and puts his/her weight on the power-assisted rollator 10 while trying to pick up goods with the other hand, the power-assisted rollator 10 can be prevented from being moved unintentionally. Therefore, it can be prevented that, when the user leans against the power-assisted rollator 10, the power-assisted rollator 10 is moved unintentionally and the user loses his/her balance and falls.

Further, in the embodiment, when the user stands still and grips only one of the pair of handles 14, the control unit 16 may control the motors (brake units) 20 to brake the rear wheels 13. Thus, even when the user tries to pick up goods with the hand not gripping the handle 14, the power-assisted rollator 10 can be prevented more effectively from being moved unintentionally.

Further, in the embodiment, when the user is walking and grips only one of the pair of handles 14, the control unit 16 may not cause the motors (brake units) 20 to brake the rear wheels 13. Thus, even when the user temporarily moves one of his/her hands away from the handle 14 during walking due to sudden weakness or so as to wipe his/her face with the hand, the power-assisted rollator may not be unnecessarily braked, making the user feel safe.

Further, in the embodiment, when the motors (brake units) 20 brake the rear wheels 13 and the user grips only one of the handles 14, the control unit 16 may control the motors (brake units) 20 to brake the rear wheels 13. Thus, even when the rear wheels 13 are braked and only one of the handles 14 is pushed such that the rear wheels 13 reach a speed higher than the predetermined speed V, the rear wheels 13 may not be unnecessarily released from braking, resulting in higher safety.

Further, in the embodiment, when the user grips both of the pair of handles 14, the control unit 16 may not cause the motors (brake units) 20 to brake the rear wheels 13. This may enable the user standing still and gripping both of the pair of handles 14 to start walking smoothly.

Further, in the embodiment, when the user grips none of the pair of handles 14, the control unit 16 may control the motors (brake units) 20 to brake the rear wheels 13. Thus, even when the user moves both his/her hands away from the pair of handles 14 on a slope, for example, the power-assisted rollator 10 can be prevented from being moved unintentionally.

Further, in the embodiment, the motors 20 may serve as both the drive units and the brake units. This may eliminate the need of providing another brake units separately from the motors 20 that assist the movement of the rear wheels 13, and therefore, the mechanism of the power-assisted rollator 10 can be simple.

In the embodiment, the control unit 16 may control the motors (brake units) 20 to brake the pair of rear wheels 13, but it may also be possible that the control unit 16 causes braking of the rear wheels 13 and/or the front wheels 12. Further, the embodiment have been described as including the pair of rear wheels (wheels) 13, but it may also be possible that the embodiment includes any endless track such as a loop of track shoes, a caterpillar and the like that forms a belt surrounding a drive wheel, a track roller, and an idling (idle) wheel.

### Second Embodiment

Next, the second embodiment of the invention will be described. The second embodiment includes the following control operation in addition to the control method of the first embodiment. In the following description of the second embodiment, the same elements as in the first embodiment will be denoted by the same reference numerals and detailed descriptions thereof will be omitted.

### Structure of Power-Assisted Rollator

In the embodiment, the motors 20 may assist the movement of the rear wheels 13 and also serve as reverse brakes. That is, in the embodiment, the motors 20 may serve as drive units for driving the rear wheels 13 and as brake units (reverse brakes) for reversely braking the rear wheels 13. When the motors 20 serve as reverse brakes, the motors 20 rotating in one rotational direction may be caused to rotate in the direction reverse to the one direction and provided with a reverse rotational torque, so as to slow down and brake the motors 20. When the motors 20 serve as brake units, the motors 20 may operate as power generators while braking the rear wheels 13 with resistance forces thereof. It may also be possible to provide another brake units such as electromagnetic brakes or mechanical brakes separately from the motors 20.

The left and right motors 20 may be controlled as one unit by the control unit 16, or the left and right motors 20 may be controlled independently from each other.

In the embodiment, when the user of the power-assisted rollator 10 grips none of the handles 14 (the non-hand gripping state) and the rear wheels 13 are driven, the control unit 16 may cause reverse braking of the motors 20 to brake the rear wheels 13. More specifically, when none of the pair of operation sensing means 24 senses the grip force imparted to the handles 14, the control unit 16 may determine that the user has moved both his/her hands away from both of the handles 14. Further, when the speed of the rear wheels 13 sensed by the speed sensor 22 is equal to or higher than a predetermined speed V (V is zero or greater), the control unit 16 may determine that the power-assisted rollator 10 is on a slope, for example, and the rear wheels 13 are driven. In this case, the control unit 16 may cause the reverse braking of the motors 20 to brake the rear wheels 13 and stop the power-assisted rollator 10.

It may also be possible that the control unit 16 brakes the rear wheels 13 based additionally on the inclination of the power-assisted rollator 10 sensed by the gyrosensor 23. That is, when the user of the power-assisted rollator 10 grips none of the handles 14 and the rear wheels 13 are driven, and further the inclination of the power-assisted rollator 10 is equal to or larger than a predetermined value, the rear wheels 13 may be braked. This may enable more accurately sensing that the power-assisted rollator 10 starts to move unintentionally on a slope, for example.

In reverse braking of the motors 20, the control unit 16 may control the motors 20 proportionally. That is, the control unit 16 may stop the power-assisted rollator 10 by the proportional control in which the motors 20 may rotate reversely when the power-assisted rollator 10 moves forward and the motors 20 may rotate forward when the power-assisted rollator 10 moves backward. The control method of the motors 20 is not limited to the proportional control but may also be feedback controls such as PID control.

As described above, the control unit 16 may control the operation and braking of the motors 20 based on the signals from the speed sensor 22 and the operation sensing means 24. Additionally, as described above, the control unit 16 may control the motors 20 based on the signals from the gyrosensor 23, in addition to the signals from the speed sensor 22 and the operation sensing means 24.

In the embodiment, the motors 20 may serve as drive units for driving the rear wheels 13 and as brake units (reverse brakes) for reversely braking the rear wheels 13. This may eliminate the need of providing another brake units separately from the motors 20 that assist the movement of the rear wheels 13, and therefore, the mechanism of the power-assisted rollator 10 can be simple.

In other respects, the power-assisted rollator may be configured in the same manner as in the first embodiment (see Figs. 1 to 4).

### Control Method by the Control Unit

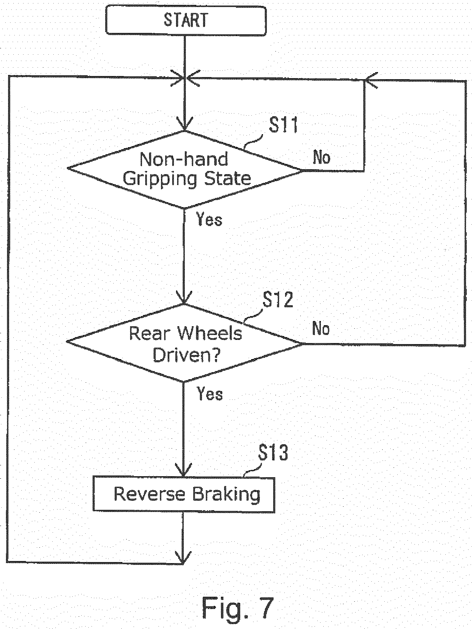

Next, a method of controlling the power-assisted rollator 10 by the control unit 16 in the embodiment will be described. Fig. 7 is a flowchart for explaining one example of the operation of the control unit 16.

First, as in the first embodiment, the control unit 16 may perceive how the pair of handles 14 are gripped by the user. More specifically, the control unit 16 may determine whether none of the left and right handles 14 is gripped (the non-hand gripping state), based on the signals from the operation sensing means 24 provided on both the left and right handles 14 (step S11).

In the case where both of the left and right handles 14 are gripped (the two hand gripping state) ("No" in step S11). the control unit 16 may continue to assist the movement of the rear wheels 13 by the motors 20 without reversely braking the rear wheels 13. In the case where one of the left and right handles 14 is gripped (the one hand gripping state) ("No" in step S11), the control unit 16 may control the motors 20 to brake the rear wheels 13, as for the first embodiment.

In the case where none of the left and right handles 14 is gripped (the non-hand gripping state) ("Yes" in step S11), the control unit 16 may then determine whether the rear wheels 13 are driven (step S12).

More specifically, the speed sensor 22 may sense the number of rotations or the speed of the rear wheels 13 and send signals representing the number of rotations or the speed to the control unit 16. The control unit 16 may calculate the speed of the rear wheels 13 based on the received signals and compare the speed with a predetermined speed V.

If the rear wheels 13 are not driven, that is, the rear wheels are stopped or moving at a speed equal to or lower than the predetermined speed V ("No" in step S12), the control unit 16 may determine that the power-assisted rollator 10 is stopped and may not cause reverse braking of the rear wheels 13. In this case, the control unit 16 may use the motors 20 as power-generating brakes and thereby brake the rear wheels 13.

On the other hand, if the rear wheels 13 are driven, that is, the rear wheels 13 are moving at a speed higher than the predetermined speed V ("Yes" in step S12), the control unit 16 may determine that the power-assisted rollator 10 is moving on a slope, etc. and cause reverse braking of the motors 20 so as to brake the rear wheels 13 (step S13).

It may also be possible that the control unit 16 uses the acceleration of the rear wheels 13 in addition to the speed of the rear wheels 13 so as to determine whether the user stands still or is walking. This may enable more accurately determining whether the power-assisted rollator 10 is moving. For example, it may also be possible that, when the speed of the rear wheels 13 is equal to or lower than the predetermined speed V and the acceleration of the rear wheels 13 is equal to or lower than a predetermined acceleration, the control unit 16 determines that the power-assisted rollator 10 is stopped and does not cause reverse braking of the rear wheels 13, and in other cases, the control unit 16 determines that the power-assisted rollator 10 is moving and cause reverse braking of the rear wheels 13.

The control unit 16 may repeat the above-described process until the main power supply of the power-assisted rollator 10 is turned off.

As described above, in the embodiment, when the user grips none of the pair of handles 14 and the rear wheels 13 are driven, the control unit 16 may cause reverse braking of the motors 20 to brake the rear wheels 13. Thus, even when the user moves both his/her hands away from the pair of handles 14 on a slope, etc., the power-assisted rollator 10 can be prevented from being moved unintentionally. As a result, it can be prevented that, for example, the power-assisted rollator 10 approaches and frightens the user on a slope or the power-assisted rollator 10 descends a slope unintentionally.

### Variations of Control Method in the Embodiment

Next, variations of the control method for the control unit 16 to control the motors 20 in the embodiment will be described.

### Variation 1 of Control Method

When the user of the power-assisted rollator 10 grips none of the handles 14 and the rear wheels 13 are driven, the control unit 16 may proportionally control the left and right motors 20 independently from each other to cause reverse braking of the motors 20.

In general, the power-assisted rollator 10 may receive a rotational force produced by caster angles of the front wheels 12, etc., and the rotational force may direct the power-assisted rollator 10 in the descending direction. That is, when the user moves his/her hands away from the handles 14 on a descending slope, the power-assisted rollator 10 which is slightly oblique may recover the straight orientation thereof naturally. On the other hand, when the user moves his/her hands away from the handles 14 on an ascending slope, the power-assisted rollator 10 which is slightly oblique may receive a force amplifying the obliqueness until the power-assisted rollator 10 is turned.

In contrast, if the control unit 16 proportionally controls the left and right motors 20 independently from each other as described above, it can be prevented that the power-assisted rollator 10 is turned when the user moves his/her hands away from the handles 14 on an ascending slope. That is, when the power-assisted rollator 10 is turned, the number of rotations of the outer rear wheel 13 is larger than that of the inner rear wheel 13. Therefore, the proportional control may be used to cause the outer rear wheel 13 to be braked (rotated reversely) more strongly than the inner rear wheel 13, so as to restrict the power-assisted rollator 10 from being turned. This may enable the power-assisted rollator 10 to be stopped stably on an ascending slope.

### Variation 2 of Control Method

When the user of the power-assisted rollator 10 grips none of the handles 14 and the rear wheels 13 are driven, the control unit 16 may proportionally control the motors 20 based on the obliqueness of the power-assisted rollator 10 sensed by the gyrosensor 23, so as to cause reverse braking of the motors 20. More specifically, the control unit 16 may vary the proportional gain of the proportional control in accordance with the obliqueness of the power-assisted rollator 10.

In general, a force for moving the power-assisted rollator 10 along an oblique direction or a force for turning the power-assisted rollator 10 may be a function of the angle of the obliqueness. Therefore, if the proportional gain of the proportional control is a function of the angle of the obliqueness, the proportional gain can be set at an appropriate value. With the proportional gain of the proportional control not too small, it can be prevented that the power-assisted rollator 10 fails to stop completely or too much time is taken to slow down the power-assisted rollator 10. In addition, turning of the power-assisted rollator 10 on an ascending slope can be prevented. On the other hand, with the proportional gain of the proportional control not too large, it can be prevented that the power-assisted rollator 10 oscillates due to diversion of the control.

### Variation 3 of Control Method

When the user of the power-assisted rollator 10 grips none of the handles 14 and the rear wheels 13 are driven, the control unit 16 may vary the method of the proportional control of the motors 20 in accordance with the time elapsed since the user moved his/her hands away from both of the handles 14, thereby to vary the strength of the braking of the rear wheels 13. More specifically, the control unit 16 may decrease the proportional gain immediately after the user moved his/her hands away from both of the handles 14 and increase the proportional gain with the time elapsed since the user moved his/her hands away from the handles 14. In this case, the rear wheels 13 may be braked weakly immediately after the user moved his/her hands away from both of the handles 14, and the rear wheels 13 may be braked more strongly as the time elapses after the user moved his/her hands away from the handles 14.

Thus, since the proportional gain is small such that the rear wheels are braked weakly immediately after the user moved his/her hands away from both of the handles 14, it can be prevented that sudden movement of the power-assisted rollator 10 frightens the user or the power-assisted rollator 10 oscillates due to diversion of the control. Even when the user moves his/her hands away from the handles 14 with the power-assisted rollator 10 left in an oblique position, the power-assisted rollator 10 can be prevented from going out of appropriate control due to the large difference in movement between the left and right rear wheels 13. Thus, since the proportional gain is small immediately after the user moved his/her hands away from both of the handles 14, and the proportional gain is increased with the time elapsed since the user moved his/her hands away from the handles 14, the power-assisted rollator 10 can be prevented from oscillating and can be stopped gently.

### Variation 4 of Control Method

When the user grips one or both of the handles 14 during reverse braking of the motors 20 by the proportional control, the control unit 16 may stop the reverse braking of the motors 20. In particular, when the user grips only one of the handles 14, the control unit 16 may stop the reverse braking of the motors 20 and use the motors 20 as power-generating brakes thereby to brake the rear wheels 13.

Thus, even when the user grips the handle 14 while the motors 20 are controlled proportionally, it can be prevented that the user feels vibration caused by the control and has an uncomfortable feeling. Also, it can be prevented that the forces to push or pull the handles 14 adversely impact the movement of the power-assisted rollator 10 to produce an unexpected force that may diverge the control.

### Variation 5 of Control Method

When the rear wheels 13 need to be braked by the motors 20 as in the case of "Braking" shown in Fig. 6, the control unit 16 may further make the following determination to control braking of the motors 20. The control unit 16 may determine whether to use the motors 20 as reverse brakes or short-circuit brakes. The motors 20 may be used not only as reverse brakes in which the motors 20 drive reversely but as short-circuit brakes in which the phases of the motors 20 are shorted.

More specifically, when the power-assisted rollator 10 is pushed by an external force or the gyrosensor 23 senses more than a predetermined amount of obliqueness of the power-assisted rollator 10, the control unit 16 may cause reverse braking of the motors 20 to brake the rear wheels 13. It can be determined that "the power-assisted rollator 10 is pushed by an external force" when, for example, (1) the rear wheels 13 are rotated, (2) a grip force (an operation forces) imparted to a handle 14 is greater than a predetermined amount, or (3) both of these conditions are true. The "obliqueness of the power-assisted rollator 10" can be determined when the gyrosensor 23 senses more than a predetermined amount of obliqueness of the power-assisted rollator 10 in the front-rear direction or the left-right direction.

On the other hand, when the power-assisted rollator 10 is stopped and the gyrosensor 23 does not sense more than a predetermined amount of obliqueness of the power-assisted rollator 10, the control unit 16 may short the phases of the motors 20 for short-circuit braking of the motors 20 to brake the rear wheels 13. It can be determined based on the speed of the rear wheels 13 sensed by the speed sensor 22 whether the power-assisted rollator 10 is stopped. The "obliqueness of the power-assisted rollator 10" can be determined when the gyrosensor 23 senses more than a predetermined amount of obliqueness of the power-assisted rollator 10 in the front-rear direction or the left-right direction.

The control unit 16 may also switch the motors 20 between the reverse braking and the short-circuit braking based on the above conditions.

In general, for stopping the power-assisted rollator 10, the short-circuit braking is preferable to the reverse braking because of lower power consumption and smaller noises. If the power-assisted rollator 10 cannot be stopped completely by the short-circuit braking, the reverse braking is preferable. More specifically, when the power-assisted rollator 10 is pushed by an external force (for example, the user leans against the power-assisted rollator 10 on one hand), the rear wheels 13 may rotate in the direction in which the user pushes, and therefore, it may be preferable to stop the power-assisted rollator 10 by the reverse braking. Further, in stopping the power-assisted rollator 10 on a slope, the rear wheels 13 may stop rotating and then the control unit 16 may switch to the short-circuit braking, but the rear wheels 13 will soon start moving. Therefore, it may also be preferable to use the reverse braking when the power-assisted rollator 10 is stopped on a slope. Further, it may also be preferable to use the reverse braking when the power-assisted rollator 10 is stopped on a laterally inclined slope, so as to prevent the rear wheels 13 from rotating.

### Variations of Elements of Power-Assisted Rollator

Next, variations of the elements of the power-assisted rollator 10 will be described. In the embodiment, the control unit 16 may cause reverse braking of the motors 20 to brake the pair of rear wheels 13, but it may also be possible that the control unit 16 causes the reverse braking of the rear wheels 13 and/or the front wheels 12. Further, the embodiment have been described as including the pair of rear wheels (wheels) 13, but it may also be possible that the embodiment includes any endless track such as a loop of track shoes, a caterpillar and the like that forms a belt surrounding a drive wheel, a track roller, and an idling (idle) wheel.

The embodiments of the present invention described above are mere examples and are not intended to limit the scope of the invention. The above embodiments may have various other forms and are susceptible to omission, replacement, and modification of various elements thereof within the scope of the invention. The above embodiments and the variations thereof are included in the scope and the purport of the invention and are also included in the inventions recited in the claims and the equivalents thereof.

### LIST OF REFERENCE NUMBERS

- 10: power-assisted rollator
- 11: frame
- 12: front wheels
- 13: rear wheels
- 14: handles
- 15: hand brake
- 16: control unit
- 20: motors
- 21: battery
- 22: speed sensor
- 23: gyrosensor
- 24: operation sensing means

## Claims

1. An electric vehicle 10 comprising:
a wheel 13 or an endless track provided on a frame 11;
a brake unit 20 configured to brake the wheel 13 or the endless track;
a pair of handles 14 connected to the frame 11 and configured to be individually operated by a user;
an operation sensing means 24 configured to sense whether individual ones of the pair of handles 14 are operated by the user; and
a control unit 16 configured to control the brake unit 20 based on a signal from the operation sensing means 24,
wherein when the user operates only one of the pair of handles 14, the control unit 16 controls the brake unit 20 to brake the wheel 13 or the endless track.

2. The electric vehicle 10 of claim 1 wherein when the user stands still and operates only one of the pair of handles 14, the control unit 16 controls the brake unit 20 to brake the wheel 13 or the endless track.

3. The electric vehicle 10 of claim 1 or 2 wherein when the user walks and operates only one of the pair of handles 14, the control unit 16 does not cause the brake unit 20 to brake the wheel 13 or the endless track.

4. The electric vehicle 10 of any one of claims 1 to 3 wherein when the brake unit 20 brakes the wheel 13 or the endless track and the user operates only one of the pair of handles 14, the control unit 16 controls the brake unit 20 to brake the wheel 13 or the endless track.

5. The electric vehicle 10 of any one of claims 1 to 4 wherein when the user operates both of the pair of handles 14, the control unit 16 does not cause the brake unit 20 to brake the wheel 13 or the endless track.

6. The electric vehicle 10 of any one of claims 1 to 5 wherein when the user operates none of the pair of handles 14, the control unit 16 controls the brake unit 20 to brake the wheel 13 or the endless track.

7. The electric vehicle 10 of any one of claims 1 to 6 wherein the wheel 13 or the endless track has a motor 20 connected thereto, and the motor 20 serves as a drive unit 20 for driving the wheel 13 or the endless track and as the brake unit 20.

8. The electric vehicle 10 of claim 1 wherein when the user operates none of the pair of handles 14 and the wheel 13 or the endless track is driven, the control unit 16 causes reverse braking of a drive unit 20 for driving the wheel 13 or the endless track thereby to brake the wheel 13 or the endless track.

9. The electric vehicle 10 of claim 8 wherein the wheel 13 or the endless track and the drive unit 20 are provided on each of left and right sides of the electric vehicle 10, and the control unit 16 controls the left and right drive units 20 independently from each other.

10. The electric vehicle 10 of claim 8 or 9 further comprising an obliqueness sensor 23 for sensing obliqueness of the electric vehicle 10, wherein the control unit 16 causes braking of the wheel 13 or the endless track based on the obliqueness of the electric vehicle 10 sensed by the obliqueness sensor 23.

11. The electric vehicle 10 of any one of claims 8 to 10 wherein the control unit 16 varies strength of braking of the wheel 13 or the endless track in accordance with time elapsed since the user moved his/her hands away from both of the handles 14.

12. The electric vehicle 10 of any one of claims 8 to 11 wherein when the user operates one or both of the pair of handles 14 during reverse braking of the drive unit 20, the control unit 16 stops the reverse braking of the drive unit 20.

13. The electric vehicle 10 of claim 1 further comprising an obliqueness sensor 23 for sensing obliqueness of the electric vehicle 10, wherein when the electric vehicle 10 is pushed by an external force or the obliqueness sensor 23 senses more than a predetermined amount of obliqueness of the electric vehicle 10, the control unit 16 causes reverse braking of a drive unit 20 for driving the wheel 13 or the endless track to brake the wheel 13 or the endless track.

14. The electric vehicle 10 of claim 1 further comprising an obliqueness sensor 23 for sensing obliqueness of the electric vehicle 10, wherein when the electric vehicle 10 is stopped and the obliqueness sensor 23 does not sense more than a predetermined amount of obliqueness of the electric vehicle 10, the control unit 16 shorts phases of a drive unit 20 for driving the wheel 13 or the endless track to brake the wheel 13 or the endless track.

15. A method of controlling an electric vehicle 10,
the electric vehicle 10 comprising:
a wheel 13 or an endless track provided on a frame 11;
a brake unit 20 configured to brake the wheel 13 or the endless track; and
a pair of handles 14 connected to the frame 11 and configured to be individually operated by a user,
the method comprising:
determining whether the user operates only one of the pair of handles 14; and
braking the wheel 13 or the endless track when the user operates only one of the pair of handles 14.
